(19) 

Europäisches
Patentamt
European
Patent Office
Office européen
des brevets

(11) **EP 4 131 597 A1**

(12) **EUROPEAN PATENT APPLICATION**
published in accordance with Art. 153(4) EPC

(43) Date of publication:
**08.02.2023 Bulletin 2023/06**

(21) Application number: **20928468.6**

(22) Date of filing: **31.03.2020**

(51) International Patent Classification (IPC):
***H01M 50/20*** (2021.01)

(52) Cooperative Patent Classification (CPC):
**H01M 50/105; H01M 50/186;** Y02E 60/10

(86) International application number:
**PCT/CN2020/082590**

(87) International publication number:
**WO 2021/196027 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Ltd.
Ningde City, Fujian 352100 (CN)**

(72) Inventors:
• LI, Rui
  **Ningde City, Fujian Province, 352100 (CN)**
• XU, Yan
  **Ningde City, Fujian Province, 352100 (CN)**
• JIANG, Xingguo
  **Ningde City, Fujian Province, 352100 (CN)**
• LIAN, Xuchen
  **Ningde City, Fujian Province, 352100 (CN)**

(74) Representative: **Icosa
83 avenue Denfert-Rochereau
75014 Paris (FR)**

(54) **PACKAGING STRUCTURE AND ELECTROCHEMICAL DEVICE APPLYING THE PACKAGING STRUCTURE**

(57)      Provided is A packaging structure including an accommodating part and a sealing part extending from the accommodating part. The accommodating part includes a first edge, a second edge, a third edge and a fourth edge which are connected in sequence. The first edge and the third edge are opposite to each other. The second edge is connected to the first edge and the third edge. The fourth edge is connected to the first edge and the third edge. The length of the first edge is less than the length of the second edge, and the length of the first edge is less than the length of the fourth edge. Moreover, the sealing part is provided at the second edge, the third edge and the fourth edge. The sealing part includes a first sealing edge provided along the second edge, and a second sealing edge provided along the fourth edge. A part of the first sealing edge extending beyond the first edge and a part of the second sealing edge extending beyond the first edge are respectively folded towards the first edge. The packaging structure favors a reduced overall occupied space. Also provided in the present application is an electrochemical device applying the packaging structure.

FIG. 1

## Description

## TECHNICAL FIELD

The present application relates to the packaging field, and in particular, to a packaging structure and an electrochemical device applying the packaging structure.

## BACKGROUND

Currently, lithium-ion batteries are widely used in portable electronic apparatuses such as mobile phones, digital cameras, laptop computers and the like due to their advantages of high energy density, high cycle life, no memory effect and the like.

In order to ensure that cells of the lithium-ion batteries have a good packaging effect, it is usually necessary to dispose a top seal and a side seal with a certain width. With the miniaturization of electronic apparatuses, the space occupied by batteries applied in the electronic apparatuses is also reduced. It is a technical problem that needs to be solved at present how to reduce the overall occupied space of the batteries.

## SUMMARY

In view of the above situation, it is necessary to provide a packaging structure favorable to the reduction of the occupied space.

In addition, it is further necessary to provide an electrochemical device applying the above packaging structure.

Provided in the application is the packaging structure including an accommodating part and a sealing part extending from the accommodating part.

The accommodating part includes a first edge, a second edge, a third edge and a fourth edge, the first edge, the second edge, the third edge and the fourth edge are connected in sequence. The first edge and the third edge are disposed oppositely. The second edge is connected to the first edge and the third edge. The fourth edge is connected to the first edge and the third edge, where length of the first edge is less than length of the second edge, and the length of the first edge is less than length of the fourth edge.

The sealing part is disposed at the second edge, the third edge and the fourth edge. The sealing part includes a first sealing edge disposed along the second edge and a second sealing edge disposed along the fourth edge, and a part of the first sealing edge extending beyond the first edge and a part of the second sealing edge extending beyond the first edge are respectively folded towards the first edge. This is favorable to the reduction of an overall volume of the packaging structure.

As a solution of the application, the length of the first edge is equal to or less than length of the third edge.

As a solution of the application, length of the part of the first sealing edge extending beyond the first edge is less than the length of the first edge, thereby further reducing the volume of the packaging structure.

As a solution of the application, length of the part of the second sealing edge extending beyond the first edge is less than the length of the first edge, thereby further reducing the volume of the packaging structure.

As a solution of the application, a sum of the length of the part of the first sealing edge extending beyond the first edge and the length of the part of the second sealing edge extending beyond the first edge is less than the length of the first edge, thereby further reducing the volume of the packaging structure.

As a solution of the application, the first edge, the second edge, the third edge or the fourth edge is an uneven edge.

As a solution of the application, the accommodating part presents a cuboid.

Provided in the application is the electrochemical device including a cell and the packaging structure as mentioned above, where the accommodating part accommodates the cell.

As a solution of the application, the cell and the accommodating part are copied in shape.

As a solution of the application, the electrochemical device further includes a tab. One end of the tab is located in the accommodating part and connected to the cell, and the other end of the tab extends from the packaging structure along the sealing part.

The electrochemical device applying the abovementioned packaging structure according to the application is beneficial to the reduction of the occupied space of the packaging structure when the cell is packaged, thereby reducing an overall occupied space of the electrochemical device, and further facilitating the reduction of the loss of an energy density of the electrochemical device.

## BRIEF DESCRIPTION OF DRAWINGS

FIG. 1 is a schematic structural diagram of an electrochemical device according to an embodiment of the application.

FIG. 2 is a schematic structural diagram of an electrochemical device according to an embodiment of the application.

FIG. 3 is a schematic disassembly diagram of an electrochemical device according to an embodiment of the application.

FIG. 4 is a schematic structural diagram of an electrochemical device according to an embodiment of the application.

FIG. 5 is a schematic bottom view of an electrochemical device according to an embodiment of the application.

FIG. 6 is a schematic side view of an electrochemical device according to an embodiment of the application.

FIG. 7 is a schematic structural diagram of an electrochemical device according to an embodiment of the application.

FIG. 8 is a schematic structural diagram of an electrochemical device according to an embodiment of the application.

FIG. 9 is a schematic state diagram of an electrochemical device according to an embodiment of the application.

FIG. 10 is a schematic state diagram of an electrochemical device of a comparative example.

Description of reference signs of main elements

| | |
|---|---|
| Packaging structure | 100 |
| Accommodating part | 10 |
| First edge | 11 |
| Second edge | 13 |
| Third edge | 15 |
| Fourth edge | 17 |
| Sealing part | 30 |
| First sealing edge | 31 |
| Second sealing edge | 33 |
| Third sealing edge | 35 |
| Packaging film | 100a |
| Electrochemical device | 200 |
| Cell | 80 |
| Tab | 90 |
| First tab | 91 |
| Second tab | 93 |

The following specific embodiments will further explain the application in combination with the above accompanying drawings.

## DETAILED DESCRIPTION OF EMBODIMENTS

The technical solutions in the embodiments of the application will be clearly and completely described below in combination with the accompanying drawings in the embodiments of the application. It is obvious that the described embodiments are only a part but not all of the embodiments of the application. All other embodiments obtained by those of ordinary skill in the art without creative efforts based on the embodiments in the application fall within the protection scope of the application.

Unless otherwise defined, all technical and scientific terms used herein have the same meaning as generally understood by those skilled in the art to which the application pertains. The terms used in the description of the application herein are merely for the purpose of describing the specific embodiments, and are not intended to limit the application.

Some embodiments of the application will be described in detail below in combination with the accompanying drawings. The embodiments described below and features in the embodiments may be combined with each other without conflict.

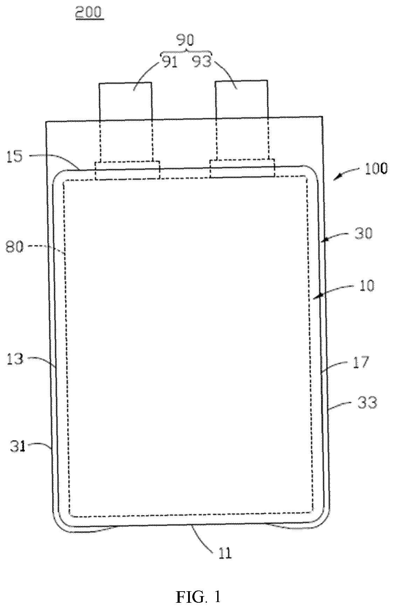

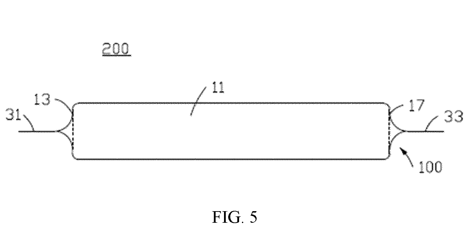

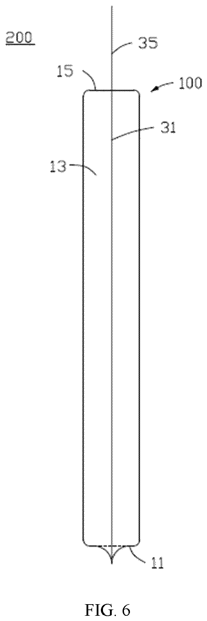

Please refer to FIG. 1 to FIG. 8. A packaging structure 100 includes an accommodating part 10 and a sealing part 30 extending from the accommodating part 10.

The accommodating part 10 includes a first edge 11, a second edge 13, a third edge 15 and a fourth edge 17 which are connected in sequence. The first edge 11 and the third edge 15 are disposed oppositely. The second edge 13 is connected to the first edge 11 and the third edge 15, and the fourth edge 17 is connected to the first edge 11 and the third edge 15. Length of the first edge 11 is less than length of the second edge 13. The length of the first edge 11 is less than length of the fourth edge 17. In the application, the length of each edge refers to length, extending from one adjacent edge to the other adjacent edge, of the edge between the two adjacent edges.

The sealing part 30 is disposed at the second edge 13, the third edge 15 and the fourth edge 17. The sealing part 30 includes a first sealing edge 31 disposed along the second edge 13 and a second sealing edge 33 disposed along the fourth edge 17. A part of the first sealing edge 31 extending beyond the first edge 11 is folded towards the first edge 11, and a part of the second sealing edge 33 extending beyond the first edge 11 is folded towards the first edge 11. The sealing part 30 forms a protruding part (i.e., bat ears) towards the first edge with a shorter length, which reduces an overall occupied space of the protruding part, thereby facilitating the reduction of an overall occupied space of the packaging structure.

The length of the first edge 11 may be greater than, equal to or less than length of the third edge 15. Preferably, the length of the first edge 11 is equal to or less than the length of the third edge 15, so that the space occupied by the part of the first sealing edge 31 extending beyond the first edge 11 and the part of the second sealing edge 33 extending beyond the first edge 11 is minimized to further facilitate the reduction of the occupied space of the packaging structure 100.

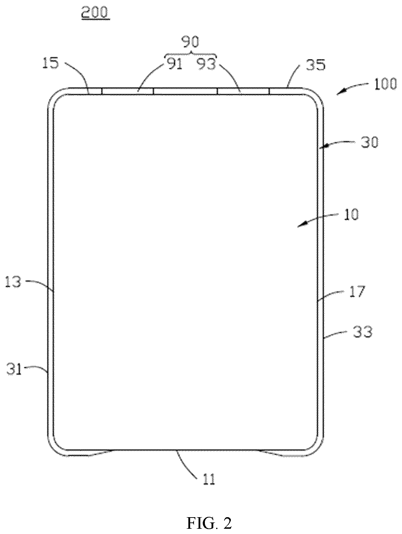

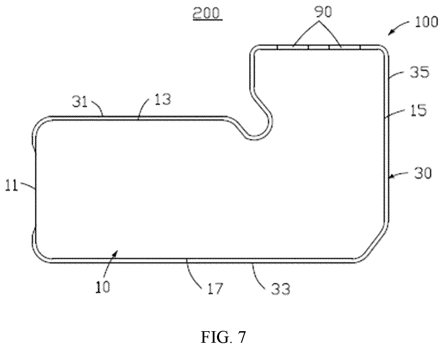

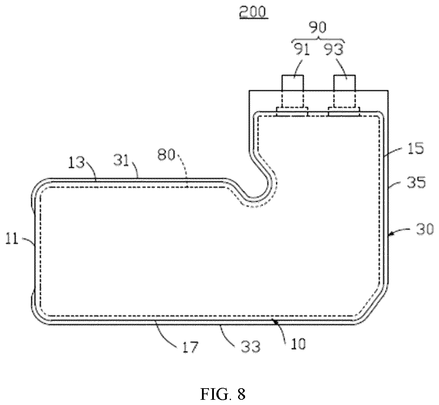

The first edge 11, the second edge 13, the third edge 15 or the fourth edge 17 may be an even edge or an uneven edge respectively. For example, in some embodiments, with reference to FIG. 1 and FIG. 2, the accommodating part 10 is a cuboid. At this point, each of the first edge 11, the second edge 13, the third edge 15 and the four edge 17 is an even edge. Moreover, the length of the first edge 11 is equal to the length of the third edge 15, and the length of the second edge 13 is equal to the length of the fourth edge 17. For another example, in some embodiments, as different from the cuboid accommodating part in FIG. 2, with reference to FIG. 7 and FIG.8, the length of the first edge 11 is less than the length of the third edge 15; a first region of the second edge 13 connected to the first edge 11 is moved inward towards the fourth edge 17 relative to a second region of the second edge 13 connected to the third edge 15, so that the second edge 13 is an uneven edge; one end of the fourth edge 17 connected to the third edge 15 is bent towards the first edge and the second edge 13, so that the fourth edge 17 is an uneven edge; and the abovementioned first edge 11, second edge 13, third edge 15 and fourth edge 17 are connected, so that the accommodating part 10 is substantially L-shaped. In some embodiments, the accommodating part 10 may also have other shapes and is not limited to the above two.

The sealing part 30 further includes a third sealing edge 35, and the third sealing edge 35 is disposed on the third edge 15.

Preferably, length of the part of the first sealing edge 31 extending beyond the first edge 11 is less than the length of the first edge 11 and/or length of the part of the second sealing edge 33 extending beyond the first edge 11 is less than the length of the first edge 11, so that the part of the first sealing edge 31 extending beyond the first edge 11 and folded towards the first edge 11 does not extend from the fourth edge 17, and/or the part of the second sealing edge 33 extending beyond the first edge 11 and folded towards the first edge 11 does not extend from the second edge 13, thereby further facilitating the reduction of the occupied space of the packaging structure 100.

More preferably, a sum of the length of the part of the first sealing edge 31 extending beyond the first edge 11 and the length of the part of the second sealing edge 33 extending beyond the first edge 11 is less than the length of the first edge 11, so that the part of the first sealing edge 31 extending beyond the first edge 11 and folded towards the first edge 11 and the part of the second sealing edge 33 extending beyond the first edge 11 and folded towards the first edge 11 are not overlapped, thereby further facilitating the reduction of the occupied space of the packaging structure 100.

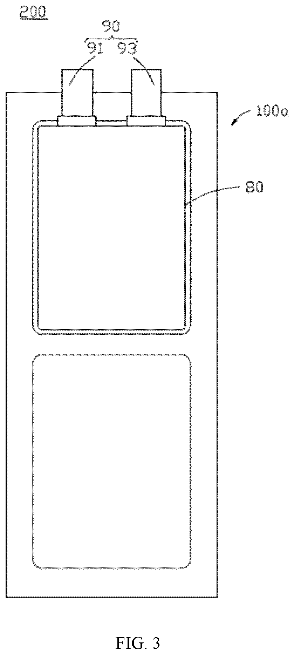

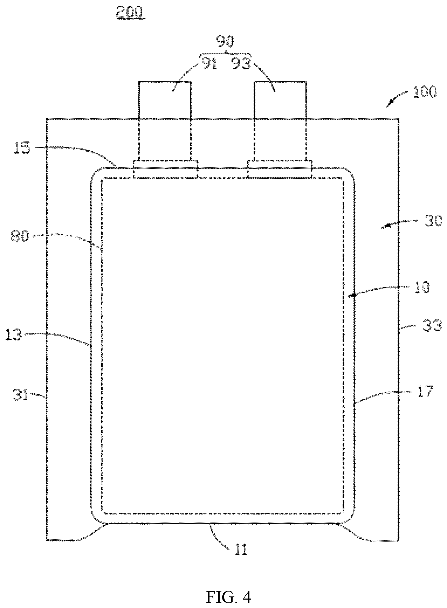

With reference to FIG. 3, the packaging structure 100 is formed by turning over and sealing of a packaging film 100a. With reference to FIG. 4, FIG. 5 and FIG. 6 at the same time, the first edge 11 corresponds to a turning-over region of the packaging film 100a. Moreover, when the sealing part 30 is formed by sealing, one end of the first sealing edge 31 close to the first edge 11 protrudes from the first edge 11 towards a direction deviated from the third edge 15, and one end of the second sealing edge 33 close to the first edge 11 protrudes from the first edge 11 towards a direction deviated from the third edge 15. That is, the one end of the first sealing edge 31 close to the first edge 11 and the one end of the second sealing edge 33 close to the first edge 11 form the bat ears. Then, the sealing part 30 is folded towards the accommodating part 10, as shown in FIG. 1 and FIG. 7.

In some embodiments, with reference to FIG. 1 and FIG. 8, the third sealing edge 35 may not be folded towards the third edge 15.

With reference to FIG. 1 to FIG. 8, the abovementioned packaging structure 100 is applied to an electrochemical device 200, and the electrochemical device 200 may be, but not only limited to, a battery. The electrochemical device 200 further includes a cell 80, and the cell 80 is accommodated in the accommodating part 10 of the packaging structure 100.

Preferably, the accommodating part 10 and the cell 80 are designed in a shape-copying manner, so as to reduce the space occupied by the accommodating part 10 in the electrochemical device 200, thereby facilitating the reduction of the overall occupied space of the electrochemical device 200, and further suppressing the loss of an energy density of the electrochemical device 200.

The electrochemical device 200 further includes a tab 90. One end of the tab 90 is located in the accommodating part 10 and connected to the cell 80, and the other end of the tab extends out of the packaging structure 100 along the sealing part 30, so as to facilitate the connection to other electronic elements other than the packaging structure 100.

The tab 90 includes a first tab 91 and a second tab 93. One end of the first tab 91 is connected to the cell 80, and the other end of the first tab extends 91 out of the packaging structure 100 along the sealing part 30. One end of the second tab 93 is connected to the cell 80, and the other end of the second tab 93 extends out of the packaging structure 100 along the sealing part 30. The first tab 91 and the second tab 93 may be disposed along the same sealing edge in the first sealing edge 31, the second sealing edge 33 and the third sealing edge 35, or may be disposed along a different sealing edge in the first sealing edge 31, the second sealing edge 33 and the third sealing edge 35. Preferably, the first tab 91 and the second tab 93 are disposed along the same sealing edge in the first sealing edge 31, the second sealing edge 33 and the third sealing edge 35. Due to the arrangement of the tabs, a volume of the packaging structure 100 will be increased. Therefore, disposing the first tab 91 and the second tab 93 along the same sealing edge is beneficial to reduce the occupied space of the electrochemical device 200.

The application will be further described below through a comparative example and an embodiment.

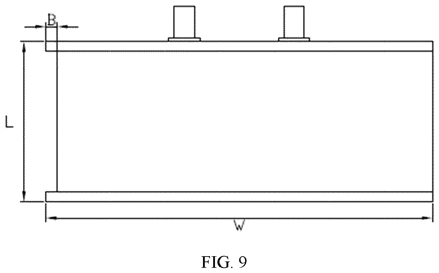

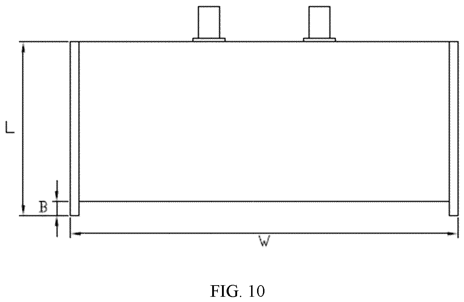

Each of the comparative example and the embodiment is a rectangular battery, and the rectangular battery includes a rectangular cell and a packaging structure accommodating the rectangular cell, where the packaging structure includes an accommodating part of which the shape is copied from that of the rectangular core. The accommodating part includes a first edge, a second edge, a third edge and a fourth edge which are connected in sequence. The first edge and the third edge are short edges of the rectangular accommodating part, and the second edge and the fourth edge are long edges of the rectangular accommodating part. The difference between the comparative example and the embodiment lies in: in the embodiment, with reference to FIG. 9, the sealing part of the packaging structure is disposed at the second edge, the third edge and the fourth edge, the sealing part protrudes from the first edge, and the protruding part is folded towards the first edge, that is, the bat ears being folded toward the short edge of the accommodating part; and in the comparative example, with reference to FIG. 10, the sealing part of the packaging structure is disposed at the first edge, the second edge and the third edge, and the sealing part protrudes from the fourth edge and the protruding part is folded towards the fourth edge, that is, the bat ears being folded towards the long edge of the accommodating part.

The length of the rectangular battery in a direction of the long edge is defined as W. The length of the rectangular battery in a direction of the short edge is defined as L. The length of the bat ears along a protruding direction is defined as B. The effective packaging area of the rectangular battery of the embodiment is S1. The effective packaging area of the rectangular battery of the comparative example is S2. The packaging areas of the rectangular batteries of the embodiment and the comparative example are both S. S=W*L; S1=(W-B)*L; and S2=(L-B)*W. Therefore, a difference value between energy densities of the rectangular battery of the embodiment and the rectangular battery of the comparative example is

$$\Delta ED = \left(\frac{1}{S1} - \frac{1}{S2}\right)\bigg/ \frac{1}{S} = \frac{S}{S1} - \frac{S}{S2} = $$

$\frac{B(W-L)}{(L-B)(W-B)}$ , and $\Delta ED$ is a positive value. It can thus be seen that compared with the packaging mode of the cell of the comparative example, the packaging mode of the cell of the embodiment can improve the energy density of the battery.

The packaging structure 100 according to the application has a simple structure, and the sealing part 30 forms a protruding part (i.e., the bat ears) towards the first edge with a shorter length, which reduces the overall occupied space of the protruding part, thereby facilitating the reduction of the overall occupied space of the packaging structure.

In addition, for those of ordinary skill in the art, various other corresponding alterations and transformations can be made according to technical concept of the application, and all these alterations and transformations should fall within the protection scope of the application.

**Claims**

1. A packaging structure, comprising an accommodating part and a sealing part extending from the accommodating part, wherein

   the accommodating part comprises a first edge, a second edge, a third edge and a fourth edge, the first edge, the second edge, the third edge and the fourth edge are connected in sequence, the first edge and the third edge disposed oppositely, the second edge connected to the first edge and the third edge, and the fourth edge connected to the first edge and the third edge, wherein length of the first edge is less than length of the second edge, and the length of the first edge is less than length of the fourth edge; and wherein
   the sealing part is disposed at the second edge, the third edge and the fourth edge, and the sealing part comprises a first sealing edge disposed along the second edge and a second sealing edge disposed along the fourth edge, a part of the first sealing edge extending beyond the first edge and a part of the second sealing edge extending beyond the first edge are respectively folded towards the first edge.

2. The packaging structure according to claim 1, wherein the length of the first edge is equal to or less than length of the third edge.

3. The packaging structure according to claim 1, wherein length of the part of the first sealing edge extending beyond the first edge is less than the length of the first edge.

4. The packaging structure according to claim 3, wherein length of the part of the second sealing edge extending beyond the first edge is less than the length of the first edge.

5. The packaging structure according to claim 4, wherein a sum of the length of the part of the first sealing edge extending beyond the first edge and the length of the part of the second sealing edge extending beyond the first edge is less than the length of the first edge.

6. The packaging structure according to any one of claims 1 to 5, wherein the first edge, the second edge, the third edge or the fourth edge is an uneven edge.

7. The packaging structure according to any one of claims 1 to 5, wherein the accommodating part presents a cuboid.

8. An electrochemical device, comprising a cell, wherein the electrochemical device further comprises the packaging structure according to any one of claims 1 to 7, the accommodating part accommodating the cell.

9. The electrochemical device according to claim 8, wherein the cell and the accommodating part are copied in shape.

10. The electrochemical device according to claim 8, wherein the electrochemical device further comprises a tab, one end of the tab located in the accommodating part and connected to the cell, and the other end of the tab extending from the packaging structure along the sealing part.

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

International application No.

**PCT/CN2020/082590**

| A. | CLASSIFICATION OF SUBJECT MATTER |
|---|---|

H01M 2/10(2006.01)i

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS: 封装; 容纳; 边; 密封; 长度; 电芯; package; contain; edge; seal; length; cell

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 206250224 U (NINGDE AMPEREX TECHNOLOGY LTD.) 13 June 2017 (2017-06-13) description, paragraphs 5-48, figures 1-14 | 1-10 |
| A | CN 109786844 A (HUAWEI TECHNOLOGIES CO., LTD.) 21 May 2019 (2019-05-21) entire document | 1-10 |
| A | CN 108666454 A (BYD COMPANY LTD.) 16 October 2018 (2018-10-16) entire document | 1-10 |
| A | WO 2019173469 A1 (SEALED AIR CORPORATION) 12 September 2019 (2019-09-12) entire document | 1-10 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 December 2020** | **08 January 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/082590**

| Patent document cited in search report | | | Publication date (day/month/year) | Patent family member(s) | | | Publication date (day/month/year) |
|---|---|---|---|---|---|---|---|
| CN | 206250224 | U | 13 June 2017 | None | | | |
| CN | 109786844 | A | 21 May 2019 | WO | 2020151392 | A1 | 30 July 2020 |
| CN | 108666454 | A | 16 October 2018 | CN | 108666454 | B | 23 October 2020 |
| WO | 2019173469 | A1 | 12 September 2019 | None | | | |

Form PCT/ISA/210 (patent family annex) (January 2015)